# EUROPÄISCHE PATENTSCHRIFT

(11) **EP 0 749 403 B1**
(45) Veröffentlichungstag und Bekanntmachung des Hinweises auf die Patenterteilung: **10.06.1998**
(21) Anmeldenummer: 95910413.4
(22) Anmeldetag: 24.02.1995
(51) Int. Cl.: C02F 9/00, C02F 1/28, C02F 3/06

(54) **VERFAHREN ZUR REINIGUNG UND WIEDERVERWENDUNG VON TENSIDHALTIGEN ABWÄSSERN**
PROCESS FOR PURIFYING AND REUSING SURFACTANT-CONTAINING WASTE WATERS
PROCEDE D'EPURATION ET DE REUTILISATION D'EAUX USEES CONTENANT DES AGENTS TENSIOACTIFS

(30) Priorität: 08.03.1994 DE 4407734
(43) Veröffentlichungstag der Anmeldung: 27.12.1996
(73) Patentinhaber: Buck Werke GmbH & Co, 73337 Bad Überkingen (DE)
(72) Erfinder: LERCHE, Elke, D-16303 Schwedt (DE); KNEIST, Karin, D-16303 Schwedt (DE); ROHBECK, Hartmut, D-16303 Schwedt (DE); HILLEMANN, Doris, D-16278 Schönermark (DE); SCHWARZ, Ralf, D-16303 Schwedt (DE)
(74) Vertreter: Brandl, Ferdinand Anton
(86) Internationale Anmeldenummer: DE9500241
(87) Internationale Veröffentlichungsnummer: WO9524362

(56) Entgegenhaltungen:
- EP-A- 0 249 861
- EP-A- 0 402 158
- WO-A-90/06288
- DE-A- 3 105 172
- DE-A- 3 305 238
- DE-C- 4 036 348
- DE-U- 9 300 330

## Beschreibung

Die Erfindung betrifft ein Verfahren zur Reinigung und Wiederverwendung von tensidhaltigen Abwässern aus Waschprozessen gemäß dem Oberbegriff des Patentanspruchs 1.

Die Reinigung und Wiederverwendung von tensidhaltigen Abwässern, insbesondere solchen aus Wäschereien, Fahrzeugwaschanlagen sowie tensidhaltige Abwässer aus privaten Haushalten, stellt eine technologische Herausforderung dar, da Tenside naturgemäß extrem lebensfeindliche Umgebungen für Organismen aller Art, insbesondere den Mikroorganismen einer Mischbiozönose, darstellen.

Darüber hinaus stellen industrielle Abwässer aus Waschprozessen, insbesondere Wäschereiabwässer oder Abwässer aus Fahrzeugwaschanlagen, häufig chemisch äußerst komplexe Mischungen dar, welche nur schwer zu reinigen bzw. wiederzuverwenden sind.

Insbesondere die Abwässer von Wäschereien sind in ihrer quantitativen und qualitativen Zusammensetzung selbstverständlich stark von den für die Wasch- bzw. Reinigungsprozesse verwendeten Waschmitteln abhängig. Da in Wäschereibetrieben überwiegend Universalwaschmittel verwendet werden, bestimmt sich die Abwasserzusammensetzung neben den zu reinigenden Textilien und deren spezifischer Verschmutzung im wesentlichen durch die Zusammensetzung solcher Universalwaschmittel.

Derartige Universalwaschmittel bestehen in der Regel aus einer Fülle von chemisch unterschiedlichen Substanzen, insbesondere anionischen und nichtionischen Tensiden, Buildern, Co-Buildern, Bleichmitteln, Bleichaktivatoren, Vergrauungsinhibitoren, Korrosionsinhibitoren, Stabilisatoren, Schauminhibitoren, Enzymen, optischen Aufhellern sowie Füllstoffen und Hilfsstoffen.

Als anionische und nichtionische Tenside kommen beispielsweise Alkylbenzolsulfonat, Alkoholsulfat sowie Alkoholethoxylat in Betracht.

Als Builder werden häufig Zeolith A, Natriumtriphosphat und Natriumcarbonat verwendet. Allerdings geht der moderne Trend dahin, aus ökologischen Gründen auf Phosphate weitgehend zu verzichten und diese beispielsweise durch Zeolithe und/oder andere Silicate zu ersetzen.

Derartige Builder sind erforderlich, um die Reinigungswirkung der Tenside um ein Vielfaches zu steigern. Insbesondere wird das Entfettungsvermögen der Wasch- bzw. Reinigungsmittel stark durch die verwendeten Builder verstärkt.

Als Co-Builder wird im wesentlichen Polycarboxylat verwendet.

Als Bleichmittel werden Perborate, insbesondere Natriumperborat sowie Tetraacetylethylendiamin als Bleichaktivator verwendet.

Als Vergrauungsinhibitoren verwendet man im wesentlichen Carboxymethylcellulose bzw. Celluloseether.

Als Korrosionsinhibitoren werden im wesentlichen Alkalisilicate eingesetzt.

Phosphonate dienen als Stabilisatoren und Seifen, Siliconöle und/oder Paraffine dienen als Schauminhibitoren.

An Enzymen finden im wesentlichen Proteasen und Amylasen, manchmal jedoch auch Lipasen, Verwendung.

Darüber hinaus werden häufig optische Aufheller vom Stilben- oder Biphenyldistyryltyp eingesetzt.

Neben Farbstoffen, Duftstoffen als Hilfsstoffen dient häufig Natriumsulfat als Füllstoff bzw. als Produktionshilfsstoff.

Die Verwendung von pulverförmigen Universalwaschmitteln in Wäschereibetrieben geht hin zum verstärkten Verzicht auf Phosphate als Builder und ersetzt diese Phosphate im wesentlichen durch Zeolithe, Seifen, Citrate und Amine, insbesondere Tri- und Monoethanolamin.

Insbesondere werden derzeit in den USA und Japan sowie in den Niederlanden, der Bundesrepublik Deutschland, der Schweiz, Österreich und Italien praktisch nur noch phosphatfreie Waschmittel eingesetzt und somit in den Abwässern von Wäschereibetrieben angetroffen.

Bei Fahrzeugwaschanlagen gelangen noch eine Reihe anderer Substanzen ins Abwasser, beispielsweise solche, welche ausgewählt werden aus: Pflegesubstanzen für Kraftfahrzeuge, insbesondere Wachse auf Naturwachs- oder Polyethylenbasis; Poliersubstanzen; Fettstoffe; Schmierstoffe, insbesondere Silikonfette, Silikonöle, Motoröle, Getriebeöle, Treibstoffe, z.B. Benzin- und Dieselkraftstoffe; Frostschutzmittel, insbesondere Glykole; Aminoxide; quaternäre Ammoniumverbindungen; Betaine; Dialkyldimethylammoniumsalze, insbesondere Chloride; Streusalze; sowie deren Mischungen.

Aufgrund der eingangs beschriebenen komplexen Zusammensetzung von tensidhaltigen Wasch- und Reinigungslösungen ist auch die Chemie der entsprechenden Abwässer äußerst komplex. Aufgrund gesetzlicher Auflagen und ökologischer Gebote sind tensidhaltige Reinigungslösungen vor dem Ablaß in die Kanalisation oder einen Vorfluter im allgemeinen einer Abwasserbehandlung zu unterziehen. Die Art, der Behandlungstyp und der notwendige Aufwand richten sich nach dem jeweiligen Reinigungsmitteltyp, den eingebrachten Verunreinigungen und den örtlichen Bestimmungen bzw. dem Abwasserbescheid. Saure oder alkalische Reiniger sind zu neutralisieren. Bei emulgierten Ölen ist eine Emulsionsspaltung vorzunehmen. Meist wird durch eine Emulsionsspaltanlage der Ölgehalt noch nicht auf die vorgeschriebenen Grenzwerte reduziert, so daß sich eine Flockung mit Aluminium- oder Eisensalzen, häufig unter Zusatz von Flockungshilfsmitteln, anschließen muß. Bei silicathaltigen Reinigungslösungen bewirkt die bei der Neutralisation ausfallende Kieselsäure eine Adsorption von Ölen und anderen organischen Substanzen.

Bei einer Abwasseraufbereitung werden die in den Anwendungslösungen enthaltenen Tenside, soweit sie öllöslich sind, bei der Abtrennung der Öle und Fette ebenfalls weitgehend entfernt.

Bei der Fällung bzw. Flockung von Aluminium- oder Eisenphosphaten bzw. deren Hydroxiden kann der chemische Sauerstoffbedarf (CSB-Wert) des Abwassers, der den wichtigsten Faktor bei der Festlegung der Abwasserabgabe darstellt, stark reduziert werden, soweit er durch Tenside oder auch andere adsorbierbare organische Substanzen hervorgerufen wird.

Eine weitere Aufbereitungsmöglichkeit für tensidhaltige Reinigungslösungen ist die teure und aufwendige Ultrafiltration.

Bei der Ultrafiltration entsteht neben Aufwand und Kosten für die Ultrafiltrationsmembranen das Problem, daß zwar öllösliche nichtionische Tenside und Antischaummittel fast vollständig zurückgehalten werden, wasserlösliche nichtionische Tenside jedoch die Membran nahezu vollständig passieren. Bei anionischen Tensiden stellt sich dagegen ein Gleichgewicht ein zwischen membrangängigen und zurückgehaltenen Tensiden (Kosswig/Stache, "Die Tenside" Carl Hanser Verlag München; Wien (1993)).

Die Behandlung von Wäschereiabwässern durch Ultrafiltration wurde beispielsweise in der DE-A 35 13 940, insbesondere zur Rückgewinnung von Wasser und unverbrauchten waschaktiven Substanzen propagiert. Derartige Ultrafiltrationsanlagen führen jedoch zu hohen Investitions- und Wartungskosten. Darüber hinaus führen Tenside häufig, insbesondere bei Langzeitgebrauch, zur Zerstörung der Ultrafiltrationsmembran.

Neben diesem Investitions- und Wartungsaufwand für Ultrafiltrationsanlagen führt noch der oben beschriebene Effekt einer nur unvollständigen Zurückhaltung der Tenside zu hoch tensidhaltigen Abwässern, welche nicht in die Kanalisation gelangen sollten.

Ein ebenfalls recht aufwendiges Verfahren zum Aufbereiten und Wiederverwenden von Wasch- und Spülwässern offenbart die DE-A 41 24 915. Diese Offenlegungsschrift lehrt es, einen Teil des tensidhaltigen Abwassers zu filtrieren und einen Teil der Abwässer zur Gewinnung von Spülwasser durch Flotation aufzubereiten.

Dieses Verfahren soll zwar einerseits die Aufsalzung des Wassers vermeiden. Andererseits wird hierzu jedoch demineralisiertes - also kostenaufwendig durch Ionenaustauscher entsalztes Frischwasser dem aus dem Abwasser gewonnenen Spülwasser wieder zugesetzt, so daß eine mittelmäßige Salzkonzentration resultiert.

Vorzugsweise verwendet dieses Verfahren des Standes der Technik Metallsalze als Flotationshilfsmittel.

Somit hat dieses Verfahren des Standes der Technik den Nachteil den bei der Flotation entstehenden Flotatschlamm wieder entsorgen zu müssen.

Darüber hinaus wird das Abwasser durch Druckentspannungsflotation aufbereitet, was wiederum zum einen technisch aufwendig und zum anderen mit relativ hohen Investitions- und Wartungskosten verbunden ist.

Eine weitere Möglichkeit, die Flotation nach der Lehre der DE-A 41 24 915 durchzuführen, liegt darin, eine sogenannte Elektroflotation anstelle der Metallsalzbehandlung durchzuführen. Dies wiederum weist jedoch den Nachteil auf, daß Elektroflotationsanlagen relativ teuer sind und löst zudem nicht das Problem, den anfallenden tensidhaltigen Flotatschlamm zu entsorgen.

Ein weiterer Lösungsansatz zur Aufbereitung von Abwässern, wie sie nach der Wäsche von Kleidungsstücken in Großwäschereien anfällt, wird in der DE-A 40 35 433 offenbart. Nach dem dort offenbarten Verfahren werden die in Großwäschereien anfallenden Öl-in-Wasser-Emulsionen mit dem organischen Lösungsmittel Perchlorethylen versetzt, um dann das Abwasser in eine erste, im wesentlichen Wasser und in geringem Maße Öl enthaltende Flüssigkeit, die durch Ultrafiltration in Wasser und deponierbares Öl entmischt wird, und in eine zweite das Lösungsmittel, die Schmutzstoffe und Öl enthaltende Flüssigkeitsphase aufzuspalten, die durch Destillation in ein deponierbares Öl-Schmutzstoff-Gemisch und das Lösungsmittel entmischt werden kann.

Dieses Verfahren des Standes der Technik weist jedoch den bedeutenden Nachteil auf, daß es zum einen ein ökotoxikologisch bedenkliches organisches Lösungsmittel, welches mit Sicherheit wenigstens in Spuren in die Umwelt gelangt, verwendet. Zum anderen ist hier ebenfalls ein Ultrafiltrationsschritt erforderlich, welcher die bereits eingangs beschriebenen Nachteile aufweist.

Darüber hinaus beschreibt die DE-A 33 05 238 ein Verfahren zur biologischen Reinigung von Wasser nach vorhergehender Klärung durch einen Vorfilter, wobei das zu reinigende Wasser in einem eigenen Filterkreis zirkuliert. Ferner erfolgt durch den Filterkreislauf auch die Belüftung bzw. der Sauerstoffeintrag mittels einer luftgetriebenen Mammutpumpe. Die Aufgabe der DE-A 33 05 238 besteht darin einen leistungsfähigen Filter zu schaffen, der unter Normalbeanspruchung nicht mehr gereinigt zu werden braucht bzw. bei dem ein automatisches Abscheiden von anfallendem Schlamm, Schmutz oder dergleichen möglich ist. Aufgrund des Aufbaues des in diesem Dokument beschriebenen Filters sowie aufgrund der Sauerstoffanreicherung des Wassers in dem Filter ist ein solcher Filter typischerweise als Aquarienfilter ausgelegt.

Allenfalls kann ein derartiger Filter noch für die Intensiv-Fischzucht verwendet werden. Dies liegt darin begründet, daß der Filter eine Kombination aus biologischem Filter und Grobschmutzfilter darstellt, da als Filtermasse Lavakies verwendet wird.

Diesem Aquarienfilter gemäß dem Stand der Technik der DE-A 33 05 238 kann zur Absorption nicht abbaubarer Stoffe ein Aktivkohlefilter nachgeschaltet werden.

Obwohl gemäß der DE-A 33 05 238 der dort beschriebene Aquarienfilter auch zur Aufbereitung von Abwässern von Wäschereien und anderen Naßbetrieben sowie zur Aufbereitung von Industrieabwässern verwendet werden können soll, werden jedoch keinerlei Angaben in Bezug auf die Art der Abwässer, insbesondere das Verhältnis von tensidhaltigen Abwässern in Bezug auf Mischbiozönosen eingegangen.

Gemäß Kosswig und Stache, "Die Tenside", Carl Hansa Verlag München Wien, 1993, stellen die Tenside unter den synthetischen Verbindungen für die umsetzenden Organismen - in der Regel Bakterien - einen Sonderfall dar. Tenside sind nämlich grenzflächenaktive Substanzen. Im Gegensatz zu anderen in Wasser gelösten organischen Verbindungen ziehen sie auf Oberflächen auf. Das gilt auch für Zelloberflächen. Diese Tatsache erleichtert rein physikalisch zwar den Substrat-Organismen (Enzym)-Kontakt. Sie intensiviert jedoch gleichzeitig die in anderem Zusammenhang erwünschte Wirkung dieser Verbindungen, nämlich Lipide zu dispergieren. Die cytoplasmatische Membran der Bakterien und anderer Mikroorganismen besteht aus Phospholipiden, die an Proteine komplex gebunden sind. Die Lipidschicht stellt einen asymmetrischen bimolekularen Film aus Triglyceriden und Phospholipiden dar, deren hydrophobe Enden nach innen weisen, und deren hydrophile Enden nach außen, den Proteinschichten zugekehrt sind. Aus der biochemischen Forschung ist es allgemein bekannt, daß Tenside auf die Membranlipide solubilisierend wirken, wenn sie auf der Zelloberfläche eine hierfür erforderliche Mindestkonzentration erreicht haben. Auf diese Weise entstehen in der Membran Öffnungen, die den Austritt von Cytoplasma ermöglichen. Dieses Phänomens bedient man sich zum Beispiel bei der Isolierung von DNA aus prokaryotischen und eukaryotischen Zellen.

Die Problematik von biologischen Reinigungsverfahren tensidhaltiger Abwässer kann man auch daran erkennen, daß die von der Europäischen Gemeinschaft vorgeschriebenen Methoden zur Ermittlung des Primärabbaugrades von Tensiden, der sogenannte OECD-Screening-Test bzw. der OECD-Confirmatory-Test von einer Testdauer von 19 Tagen beim Screening-Test und von einer Testdauer von 21 Tagen beim Confirmatory-Test ausgeht.

Nach dem OECD-Screening-Test werden Tenside, die nach 19 Tagen zu mindestens 80% abgebaut sind, als biologisch abbaubar bezeichnet.

Aus diesem Grunde fehlt es bislang an einem biologischen Verfahren zur Reinigung und Wiederverwendung von tensidhaltigen Abwässern.

Somit ist es Aufgabe der vorliegenden Erfindung, ein Verfahren zur Reinigung und Wiederverwendung von tensidhaltigen Abwässern zur Verfügung zu stellen, welches wirksam, schnell und kostengünstig durchzuführen ist.

Die Lösung dieser Aufgabe erfolgt durch die Merkmale des Patentanspruchs 1.

Das erfindungsgemäße Verfahren zur Reinigung und Wiederverwendung von tensidhaltigen Abwässern ist bestens geeignet, Abwässer aus Waschprozessen, insbesondere Abwässer von Wäschereien bzw. Großwäschereien, Fahrzeugwaschanlagen sowie privaten Haushalten, zu reinigen und das gereinigte und aufbereitete Wasser wieder als Speisewasser für die Waschanlage bzw. für Spülungen, Reinigungen oder zur Grünanlagenbewässerung zu verwenden.

In vorteilhafter Weise ist es mit dem erfindungsgemäßen Verfahren somit möglich mittels eines biologischen Schrittes - nämlich einem Bioreaktor, welcher eine tensidabwasserspezifische Mischbiozönose aufweist, in Zusammenarbeit mit einer Adsorberstufe bis zu 95% des Abwassers wieder zu in dem verwendeten Waschprozeß verwendbaren Speisewasser aufzubereiten.

Besonders überraschend ist hierbei die Tatsache, daß tensidhaltige Abwässer in der Regel in wenigen Stunden bis zu einem Tag derart biologisch aufbereitet werden können, daß eine Reduzierung der organischen Inhaltsstoffe um 80 bis 90% erfolgt. Dies ist umso überraschender, als der OECD-Screening-Test und der OECD-Confirmatory-Test von einer biologischen Abbaubarkeit der Tenside ausgehen, wenn sie innerhalb von 19 bzw. 21 Tagen zu 80% abgebaut sind, was gleichbedeutend ist mit einem für abwassertechnische Zwecke nur langsamen Abbau der Tenside.

Die noch verbleibenden biologisch evtl. schwer abbaubaren Inhaltsstoffe werden dann in einer nachgeschalteten Adsorberstufe aus dem Wasser entfernt und nach Erschöpfung des Adsorbers geeignet entsorgt.

Als besonders bevorzugtes Adsorbermaterial dient Aktivkohle. Jedoch können auch sämtliche anderen Adsorbenzien wie beispielsweise Kieselgur, Silicagel oder andere Materialien mit großer innerer Oberfläche als Adsorber eingesetzt werden.

Aufgrund des erfindungsgemäßen Verfahrens braucht lediglich mit einem Zusatz von etwa 5 bis 20% Frischwasser gerechnet werden, so daß sich enorme Wassermengen einsparen lassen.

Ein wesentlicher Vorteil des erfindungsgemäßen Verfahrens unter Verwendung eines Bioreaktors liegt in der realisierbaren Kreislaufführung des Waschwassers begründet. Hierdurch sind wirkungsvolle Einsparungen von Trink- und Abwasser erzielbar, die sich bei den tendenziell stark steigenden Preisen der Trinkwasserversorgung bzw. der Abwasserentsorgung äußerst positiv auf die Betriebskostenentwicklung sowie auf den Return-of-Investment auswirken.

Ein weiterer wesentlicher Vorteil des erfindungsgemäßen Verfahrens liegt in seiner hohen ökologischen Verträglichkeit.

Zu den bislang gängigen Verfahren der Abwasseraufbereitung wie Flockung, Neutralisation oder Ultrafiltration stellt das erfindungsgemäße Verfahren aufgrund der Verwendung eines Bioreaktors eine weitaus bessere Alternative dar, da der zusätzliche Chemikalieneinsatz zur chemischen Abwasseraufbereitung, beispielsweise für Fällungen, Flockungen und/oder Flotation entfällt.

Zudem besitzt das biologisch gereinigte Wasser gemäß dem erfindungsgemäßen Verfahren eine geringe Härte, was bei der vorgesehenen Prozeßwasserkreislaufführung wiederum Verkalkungen im Rohrleitungssystem verhindert und darüber hinaus noch einen deutlich verminderten Waschmitteleinsatz ermöglicht.

Somit trägt das erfindungsgemäße Verfahren wesentlich zur Verringerung der Umweltbelastung bei.

Ein besonderer Vorteil des Bioreaktors besteht darin, daß keine großen Mengen Biomasse ausgetragen werden, keine kontinuierlichen Auskreisungen von Überschußbiomasse erfolgen und Biomassenrückführungen nicht erforderlich sind.

Anspruch 2 nennt tensidhaltige Abwässer, die durch das erfindunggemäße Verfahren bevorzugt gereinigt werden können. Insbesondere ist das Verfahren gemäß der vorliegenden Erfindung geeignet, um tensidhaltige Abwässer aus Wäschereien, Fahrzeugwaschanlagen, Waschanlagen für Behälter, insbesondere Lebensmittelbehältnisse, wie z.B. Flaschen, Gläser oder dergleichen, medizinischen Waschanlagen, z.B. für chirurgische Instrument und/oder Behälter oder privaten Haushalten zu reinigen.

Wenn tensidhaltige Abwässer aus privaten Haushalten verwendet werden, so werden diese gemäß Anspruch 3 vorzugsweise ausschließlich der Fäkalabwässer verwendet. Dies ist leicht zu bewerkstelligen durch getrenntes Sammeln und Aufbereiten der tensidhaltigen Abwässer und der Fäkalabwässer.

Das aus privaten Haushalten stammende tensidhaltige Abwasser wird nach der Reinigung und vor der Wiederverwendung vorzugsweise entkeimt, beispielsweise durch hochenergetisches UV-Licht und/oder mittels eines Ozonisators und kann dann z.B. im häuslichen Wasserkreislauf, z.B. für die WC-Spülung oder als Reinigungswasser oder zur Bewässerung verwendet werden.

Hierdurch lassen sich enorme Trinkwassermengen einsparen und die Abwasserabgabe über das kommunale Abwassernetz wird drastisch reduziert. Des weiteren reduzieren sich die Abwasserabgaben für den jeweiligen Haushalt. Ganz besonders attraktiv ist das erfindungsgemäße Verfahren für Hotels, Pensionen und Restaurants, die einen hohen Trinkwasserdurchsatz haben.

Gemäß Anspruch 4 können Abwässer gereinigt werden, welche Tenside nahezu aller Art enthalten, insbesondere jedoch solche, die von Wasch- und Reinigungsmitteln stammen.

Die abhängigen Ansprüche 5, 6 und 7 stellen vorteilhafte Weiterbildungen des erfindungsgemäßen Verfahrens insoweit dar, als die dort aufgeführten Substanzen heutzutage in größeren Mengen in Universalwasch- und Reinigungsmitteln vorkommen, welche in Wäschereien sowie in Waschprozessen, z.B. in Fahrzeugwaschanlagen und/oder in privaten Haushalten verwendet werden.

Nach Anspruch 8 ist es bevorzugt, das erfindungsgemäße Verfahren auf Abwässer anzuwenden, welche einen alkalischen pH, insbesondere einen pH von ca. 8 bis 11 aufweisen.

Gemäß Anspruch 9 werden vorzugsweise Abwässer gereinigt, welche einen Mangan- und/oder Eisengehalt kleiner 1% aufweisen. Jedoch ist es selbstverständlich auch möglich, mit höheren Mangan- und/oder Eisengehalten oder Schwermetallgehalten das erfindungsgemäße Verfahren durchzuführen. Sollten die Schwermetallgehalte jedoch zu groß werden, so sind gegebenenfalls geeignete Maßnahmen wie Prezipitation, Flockung oder zusätzliche Adsorption durchzuführen.

Gemäß Anspruch 10 können Abwässer verwendet werden, welche einen chemischen Sauerstoffbedarf (CSB) von ca. 150 bis 2000 mg/l O₂ aufweisen.

Dies hat den Vorteil, daß somit die meisten industriell anfallenden Tensidabwässer mit dem vorliegenden Verfahren gereinigt werden können. Mit dem Verfahren gemäß der vorliegenden Erfindung können prinzipiell sämtliche tensidhaltigen Abwässer aufbereitet werden.

So ist es beispielsweise durchaus möglich, das vorliegende Verfahren auch mit den Abwässern einer Großküchenspülanlage durchzuführen, um diese Abwässer dann als Brauchwässer weiterzuverwenden.

Von besonderer Bedeutung ist das vorliegende Verfahren jedoch für die Aufbereitung von Textilwäschereiabwässern.

Einen säulenförmigen Bioreaktor zu verwenden, hat den Vorteil der optimalen Prozeßführung.

Einen Loch- bzw. Siebbodenkaskadenreaktor gemäß Anspruch 11 zu verwenden, hat den Vorteil, daß mit einem solchen Bioreaktortyp eine strömungsgünstige Prozeßführung bei gleichzeitig großer Oberfläche und leichter Reinigungsfähigkeit des Bioreaktors möglich ist.

Einen Säulenreaktor mit im Inneren unbeweglichen Oberflächen gemäß Anspruch 12 zu verwenden, weist den Vorteil auf, daß zum einen der Sauerstoffeintrag in den Bioreaktor gefördert werden kann, und zum anderen ist ein innigeres Inkontaktbringen des auf den inneren Oberflächen des Bioreaktors sich befindenden Biofilmes in Form einer Mischbiozönose möglich.

Den Bioreaktor im Gleichstrom mit dem zu reinigenden Abwasser mit Luft und/oder Sauerstoff zu beschicken, hat den Vorteil, daß hierdurch optimale aerobe Bedingungen für die Mischbiozönose im Inneren des Reaktors geschaffen werden.

Die für die vorliegende Erfindung verwendeten Bioreaktoren werden vorzugsweise aus inerten Kunststoffen und/oder Metallen gemäß Anspruch 13 gefertigt.

Gemäß Anspruch 14 siedelt sich eine wäschereiabwasserspezifische Mischbiozönose, dem Abbaugrad der Abwasserinhaltsstoffe entsprechend, an, bzw. muß im Bedarfsfall angeimpft werden. Die für das Verfahren der vorliegenden Erfindung verwendete wäschereiabwasserspezifische Mischbiozönose enthält im wesentlichen adaptierte aerobe heterotrophe Bakterien sowie aerobe heterotrophe tierische Einzeller und mehrzellige tierische Organismen, insbesondere Mikroorganismen.

Dort, wo im Bioreaktor die Luft zugeführt wird - in der Regel am unteren Ende - finden sich schwankende Sauerstoff- und/oder Nährstoffkonzentrationen.

Dort sind im wesentlichen Bakterien angesiedelt, welche derartige Sauerstoffschwankungen und/oder Nährstoff schwankungen ohne weiteres verkraften.

Darüber hinaus befindet sich in diesem Teil der wäschereiabwasserspezifischen Mischbiozönose noch eine Ansammlung von fädigen Schwefelbakterien. Dabei obliegt den heterotrophen Bakterien zunächst der Hauptanteil am Abbau der organischen Substanzen der Abwässer.

Begibt man sich relativ zum Lufteinstrom zu weiter oben liegenden Kompartimenten, so findet man Protozoen, insbesondere Flagellaten, welche eine besonders hohe pH-Toleranz von 4,7 bis 9,6 und auch darüber aufweisen.

Als nächste Stufe der Mischbiozönose findet man Ciliaten vor, hier insbesondere Uronema marinum sowie in den weitgehend gereinigten Abschnitten Vorticellen und Oxytrichia fallax.

Hierbei ist es besonders erwähnenswert, daß die Flagellaten und Ciliaten, z.B. Coliforme und andere Bakterien auffressen, wodurch deren ungehemmte Vermehrung gehindert wird.

Darüber hinaus findet man in den wäschereiabwasserspezifischen Mischbiozönosen auch Nematoden und Rotatorien (Rädertierchen), also mikroskopisch kleine tierische Vielzeller, welche abgestorbene Biomasse, feinste Partikel, Bakterien und Ciliaten, fressen und verdauen.

Diese oben beschriebenen Mikroorganismen bilden eine für die vorliegende Erfindung charakteristische Mischbiozönose, wobei diese in der Lage ist, tensidhaltige Abwässer abzubauen, da sie aus ungeklärten tensidhaltigen Industrieabwässern entnommen wurde, und auf den inneren Oberflächen des Bioreaktors der vorliegenden Erfindung angesiedelt wurde.

Aktivkohle als Adsorbermaterial gemäß Anspruch 15 zu verwenden, hat zum einen den Vorteil, daß hiermit ein hochaktives Adsorbermaterial mit großer Adsorptionskapazität zur Verfügung steht, welches zudem noch kostengünstig ist und zum anderen leicht entsorgt werden kann.

Das nach dem erfindungsgemäßen Verfahren gereinigte Wasser weist vorteilhaft gemäß dem Patentanspruch 16 einen pH-Wert von ca. 6 bis 10, insbesondere ca. 8 bis 9 auf, womit es in der Nähe des Neutralpunktes liegt, so daß es ohne weitere pH-Einstellung wieder in einen Waschkreislauf eingeschleust werden kann.

Sollte es jedoch erforderlich sein, ein neutrales oder leicht saures Wasser zu erhalten, so kann ohne weiteres - beispielsweise etwa durch CO₂-Gaben - der pH-Wert auf 7 oder darunter eingestellt werden.

Die Maßnahmen des Anspruchs 17, daß ca. 80 bis 95% der eingesetzten Abwässer für eine erneute Einspeisung in einen Wäschereiprozeß als gereinigtes Wasser wiedergewonnen werden, führen zu einem enorm wirtschaftlichen Verfahren sowie zu einem sehr schnellen Return-of-Investment.

Vorteilhaft werden gemäß Anspruch 18 prozeßbedingte Wasserverluste durch Frischwasserzugabe und nicht vorrangig durch Zugabe von demineralisiertem oder entionisiertem Wasser ersetzt.

Gemäß Anspruch 19 werden die zu reinigenden Abwässer zwischen einer und zehn Stunden, insbesondere zwischen zwei und sechs Stunden, vorzugsweise ca. vier Stunden im Bioreaktor aufbereitet, wobei dann der Bioreaktor gegebenenfalls im Kreislaufbetrieb gefahren wird. Dies hat den Vorteil, daß bereits nach vier Stunden häufig nur noch 20% der organischen Inhaltsstoffe im Abwasser vorhanden sind und die restlichen 80% durch die wäschereiabwasserspezifische Mischbiozönose metabolisiert worden ist.

Gemäß Anspruch 20 weist somit das den Bioreaktor verlassende Wasser lediglich noch ca. 5 bis 20% der organischen Inhaltsstoffe der eingespeisten Abwässer auf, welche dann vorteilhaft leicht über den nachgeschalteten Adsorber entfernt werden können, so daß der Adsorber lange Standzeiten aufweist, bevor er selbst weiter entsorgt bzw. ausgewechselt werden muß.

Vorteilhaft können gemäß Anspruch 21 die zu reinigenden Abwässer bei Bedarf zusätzlich mit spezifischen Nährstoffen für die mischbiozönotischen Mikroorganismen versetzt werden, - falls den Mikroorganismen ein spezieller Nährstoff aus den eingespeisten Abwässern nicht zugänglich ist.

Gemäß Anspruch 22 können mit dem erfindungsgemäßen Verfahren die dort angegebenen Hilfsstoffe ebenfalls aus dem Wasser entfernt werden, was deshalb besonders vorteilhaft ist, da die in Anspruch 22 angegebenen Hilfsstoffe praktisch in jedem Universalwasch- und/oder Reinigungsmittel auftreten.

Anspruch 23 listet bevorzugte Stoffe oder Stoffgemische auf, wie sie im Abwasser von Fahrzeugwaschanlagen auftreten.

Gegebenenfalls muß bei der Aufbereitung von tensidhaltigen Abwässern an Fahrzeugwaschanlagen eine Ölabscheidung mit konventionellen Mitteln durchgeführt werden und die Ölphase entsorgt werden.

Weitere Vorteile und Merkmale der vorliegenden Erfindung ergeben sich aufgrund der Beschreibung eines Ausführungsbeispiels sowie anhand der Zeichnungen.

Es zeigt:
- Fig. 1: das erfindungsgemäße Verfahren in schematischer Darstellung am Beispiel der Reinigung von Wäschereiabwässern
- Fig. 2: das erfindungsgemäße Verfahren in schematischer Darstellung am Beispiel der Reinigung von Abwässern aus Fahrzeugwaschanlagen; und
- Fig. 3: das erfindungsgemäße Verfahren in schematischer Darstellung am Beispiel der Reinigung von Haushaltsabwässern.

### Beispiel 1

Die Abwässer einer Wäscherei 1 werden in einem Stapelbehälter 3 gesammelt, Flusen und Textilabrieb werden weitestgehend über Filtersiebe 2 abgetrennt. Das Volumen des Behälters wird so dimensioniert, daß im Beispielsfalle eine Zweitagesabwassermenge bevorratet werden kann.

Die gesammelten Abwässer weisen folgende Werte auf:

| | |
|---|---|
| CSB | 510 mg/l O₂ |
| BSB₅ | 200 mg/l O₂ |
| pH | 8,0 |
| Härte | 5,6° dH |
| Leitfähigkeit | 1670 µS/cm |
| Gesamtmenge organische Bestandteile | TOC = 82 mg/l |

Ein derartiges Abwasser wird einem unter aeroben Bedingungen arbeitenden Bioreaktor 4 zugeführt. Am unteren Ende 5 des Bioreaktors 4 wird Luft in den Bioreaktor 4 eingeleitet, so daß sich aerobe Bedingungen bilden. Am oberen Ende 6 des säulenförmigen Bioreaktors 4 verläßt das biologisch aufbereitete Wasser den Bioreaktor 4 und wird einer Aktivkohlesäule als Adsorber 7 zugeführt. Das nunmehr auch adsorptiv gereinigte Wasser verläßt über die Leitung 8 den mit Aktivkohle gepackten Adsorber 7 und wird in einem Stapelbehälter 9 gesammelt und bei Bedarf über Leitung 10 wieder in die Wäscherei 1 eingeschleust, wobei bei Bedarf 5 bis 20% Frischwasser eingespeist werden.

Das mittels des erfindungsgemäßen Verfahrens aufbereitete Wasser weist die folgenden Werte auf:

| | |
|---|---|
| CSB | 22,0 mg/l O₂ |
| BSB₅ | 5 mg/l O₂ |
| pH | 8,2 |
| Härte | 5,6° dH |
| Leitfähigkeit | 1670 µS/cm |
| Gesamtmenge organische Bestandteile | TOC = 7 mg/l |

Zirka alle 35 Wochen erfolgt ein Rückspülen des Bioreaktors 4, wobei dessen im wesentlichen aus Biomasse bestehender Rückstand 11 dann verwertet bzw. entsorgt wird.

Das aufzubereitende Abwasser verweilt vier Stunden im Bioreaktor 4.

Wie jedes biotechnologische System, muß auch der in dem erfindungsgemäßen Verfahren verwendete Bioreaktor "eingefahren" werden (6 Wochen).

Dies geschieht vorteilhaft und in einfacher Weise dadurch, daß man aus Abwässern von industriellen Wäschereien, im Beispielsfalle Textilwäschereien, welche sich schon längere Zeit im Betrieb befinden, mehrere Proben von sich dort befindlichen Biofilmen, welche die wäschereispezifischen Mischbiozönosen bilden, auf den inneren Oberflächen des Bioreaktors, vorzugsweise einem Lochbodenkaskadenbioreaktor, ansiedelt. Dies geschieht dadurch, daß man das Biofilmmaterial aus den entsprechenden Industrieabwässern in Wasser suspendiert, gegebenenfalls mit zusätzlichen Nährstoffen, wie Phosphaten und/oder Nitraten und/oder Aminosäuren, versorgt und dieses mehr oder weniger synthetische Abwasser für mehrere Tage in dem einzufahrenden Bioreaktor aeroben Bedingungen aussetzt. Hierdurch siedelt sich eine wäschereispezifische Mischbiozönose auf den inneren Oberflächen des Bioreaktors an, welche dann in der Lage ist, tensidhaltige Abwässer der beschriebenen Art mittels des erfindungsgemäßen Verfahrens abzubauen.

Diese Beimpfung des Bioreaktors kann reproduzierbar durchgeführt werden, immer mit dem Ergebnis, daß tensidhaltige Abwässer zu ca. 80% in ihrem organischen Gehalt vermindert werden.

### Beispiel 2

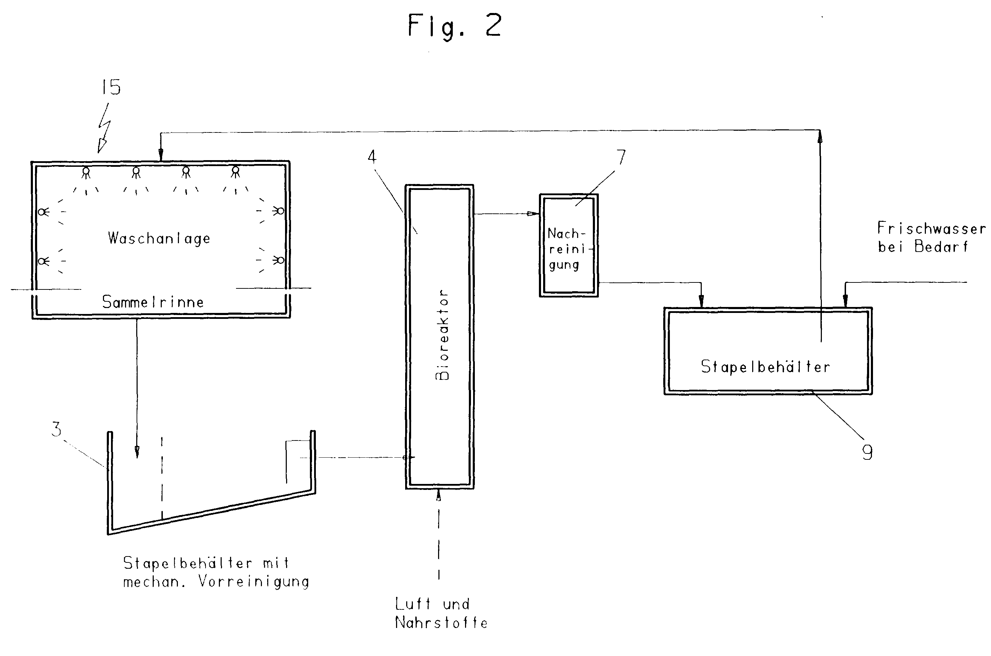

Das System der Wasserrückgewinnung aus Fahrzeugwaschanlagen 15 kann gemäß Fig. 2 betrieben werden.

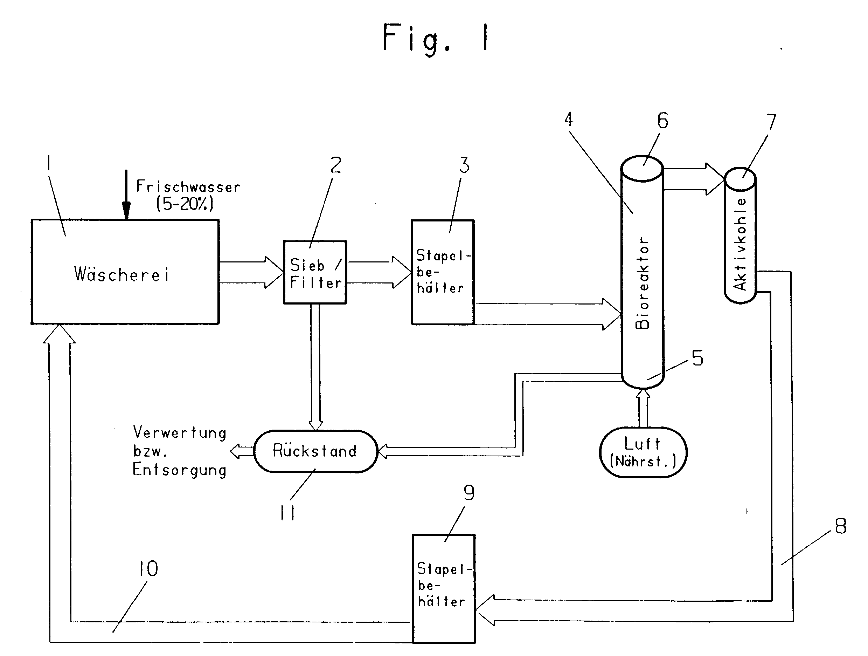

In Fig. 2 werden gleiche Teile wie in Fig. 1 mit denselben Bezugszeichen wie in Fig. 1 versehen.

Das bei der Fahrzeugwäsche anfallende Schmutzwasser wird in einem speziellen Stapelbehälter 3 gesammelt. Das Behältervolumen wird so dimensioniert, daß ein relativ gleichmäßiges Mischabwasser bevorratet wird (ca. 0,5 bis 1,0 Tagesabwassermengen). Die mechanische Vorreinigung von Sand und Feststoffen erfolgt durch Sedimentation im Stapelbehälter 3. Die sich an der Oberfläche bildende Ölschicht wird abgezogen, gesammelt und geeignet entsorgt.

Im Bioreaktor 4 wird das anfallende Abwasser im kontinuierlichen Durchfluß unter definierten aeroben Bedingungen und der Zugabe von speziellen Nährstoffen gereinigt. Die Verweilzeit des Wassers im Bioreaktor 4 richtet sich nach der Schmutzfracht. Sie liegt im Mittel zwischen 4 bis 8 Stunden.

Das biologisch aufgereinigte Wasser wird einer mechanischen Nachreinigungsstufe 7 zur Entfernung von ausgetragenen Bioflocken zugeführt. Anschließend wird es in einem zweiten Stapelbehälter 9 gesammelt und je nach Bedarf wieder in die Fahrzeugwaschanlage 15 eingespeist. Spritz- und Verdunstungsverluste können durch Frischwasserzudosierung ausgeglichen werden.

### Beispiel 3

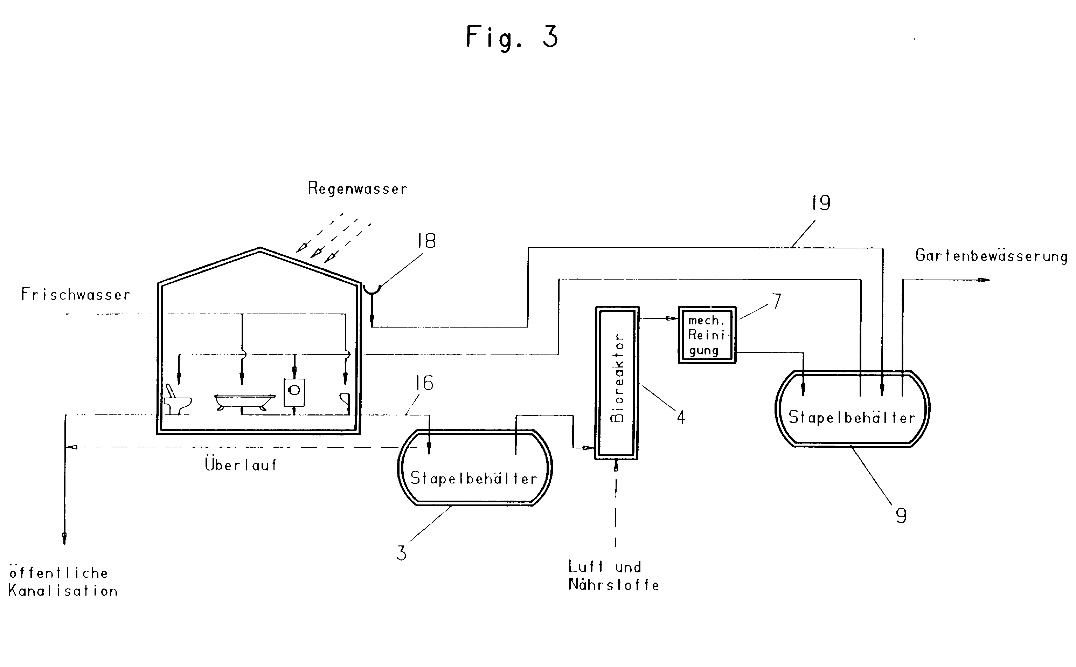

Die Abwasserkreislaufführung für private Haushalte bzw. größere Wohneinheiten (Hotels, Pensionen usw.) gestaltet sich ähnlich, wie bereits in den Beispielen 1 und 2 beschrieben und ist in Fig. 3 schematisch dargestellt.

Das gesamte im Haushalt anfallende Abwasser 16, ausschließlich der Fäkalabwässer, die direkt in die öffentliche Kanalisation geleitet werden, wird in einem ausreichend dimensionierten Stapelbehälter 3 gesammelt und kontinuierlich dem Bioreaktor 4 zur Aufreinigung zugeführt. Das Volumen des Stapelbehälters 3 ist bevorzugt so zu bemessen, daß eine ausreichende Durchmischung des Abwassers erfolgt und Stoßbelastungen im Zulauf zum Bioreaktor 4 ausgeglichen werden.

An die biologische Reinigung schließt sich eine Nachbehandlungsstufe 7 zur Abtrennung möglicherweise ausgetragener Bioflocken an. Es empfielt sich darüberhinaus das Wasser zu entkeimen, um im zweiten Stapelbehälter 9 ein biologisches Wachstum zu verhindern. Das gereinigte Wasser steht dem häuslichen Wasserkreislauf, z.B. für die WC-Spülung, die Waschmaschinenwäsche, als Putz- und Reinigungswasser oder für die Gartenbewässerung, zur Verfügung und trägt somit dazu bei, erhebliche Mengen an Trinkwasser einzusparen. Zusätzliche vorteilhafte Effekte lassen sich erzielen, wenn die Regenwassernutzung in diesen beschriebenen Kreislauf einbezogen wird, etwa in der Art, daß Regenwasser direkt aus der Regenrinne 18 über Leitung 19 in den zweiten Stapelbehälter 9 geleitet wird.

Somit steht mit der vorliegenden Erfindung erstmals ein biologisches Abbauverfahren für tensidhaltige Abwässer zur Verfügung. Selbstverständlich ist das Verfahren nicht auf die beispielhaft erläuterten Waschprozesse beschränkt, sondern es kann bei vielen Arten von wasser-, wasch- und reinigungsmittelintensiven Prozessen vorteilhaft eingesetzt werden, wobei dann die Mischbiozönose eine entsprechend andere biologische Zusammensetzung aufweisen wird.

## Patentansprüche

1. Verfahren zur Reinigung und Wiederverwendung von tensidhaltigen Abwässern aus Waschprozessen, wobei das den Waschprozeß verlassende Wasser nach Abtrennung von Sink- und Schwebstoffen einem Sammelbehälter zugeführt wird ; und dieses physikalisch vorgereinigte Wasser einem unter aeroben Bedingungen arbeitenden Bioreaktor zugeführt wird,
dadurch gekennzeichnet,
daß der Bioreaktor säulenförmig ist und eine kompartinentierte, tierische Vielzeller enthaltende, tensidabwasserspezifische Mischbiozönose zur biologischen Aufbereitung des Abwassers aufweist, und daß der Bioreaktor im Gleichstrom zum zu reinigenden Abwasser mit Luft und/oder Sauerstoff beschickt wird;
daß das den Bioreaktor verlassende Wasser einem Adsorber zugeführt wird; und
daß das den Adsorber verlassende biologisch und physikalisch gereinigte Wasser wieder dem Waschprozeß als Speisewasser zugeführt wird.

2. Verfahren nach Anspruch 1, dadurch gekennzeichnet, daß Abwässer verwendet werden, die aus Wäschereien; Fahrzeugwaschanlagen; Waschanlagen für Behälter, insbesondere Lebensmittelbehältnisse, wie z.B. Flaschen, Gläser oder dergleichen; medizinischen Waschanlagen, z.B. für chirurgische Instrumente und/oder Behälter; oder privaten Haushalten, stammen.

3. Verfahren nach Anspruch 1 oder 2, dadurch gekennzeichnet, daß tensidhaltige Abwässer aus privaten Haushalten vorzugsweise ausschließlich der Fäkalabwässer, verwendet werden; und
wobei das gereinigte Abwasser vor Wiederverwendung entkeimt wird.

4. Verfahren nach einem der Ansprüche 1 bis 3, dadurch gekennzeichnet, daß Abwässer verwendet werden, die Tenside enthalten, welche ausgewählt werden aus der Gruppe bestehend aus:
anionischen Tensiden, insbesondere Carboxylaten, Seifen, Fettalkylethercarboxylaten, Alkylsulfaten, insbesondere Natriumdodecylsulfat (SDS), Alkylphosphaten, Alkyletherphosphaten, Alkylbenzolsulfonaten, Olefinsulfonaten, Alkansulfonaten, und Sulfobernsteinsäureestern;
nichtionischen Tensiden, insbesondere Oxethylaten, Fettsäurealkanolamiden, Polyhydroxyverbindungen, Alkyloligoglycosiden und Alkylpolyglycosiden ; und
kationischen Tensiden, insbesondere Tetraalkylammoniumsalzen, Imidazoliniumsalzen; sowie
deren Mischungen.

5. Verfahren nach einem der Ansprüche 1 bis 4, dadurch gekennzeichnet, daß Abwässer verwendet werden, welche zusätzlich Anionen enthalten, welche ausgewählt werden aus der Gruppe bestehend aus:
anorganischen Anionen, insbesondere Nitraten, Nitriten, Sulfaten, Sulfiten, Sulfiden, Hydrogensulfiten, Phosphonaten, Phosphaten, Oligo- und Polyphosphaten, Hydrogenphosphaten, Hydroxiden, Halogeniden, insbesondere Chloriden, Silicaten; und
organischen Anionen, insbesondere Carbonsäureanionen, vorzugsweise Acetate; substituierten Carbonsäureanionen, insbesondere Hydroxycarbonsäuren wie Citrate, Tartrate;
sowie deren Mischungen.

6. Verfahren nach einem der Ansprüche 1 bis 5, dadurch gekennzeichnet, daß Abwässer verwendet werden, welche zusätzlich Kationen enthalten, welche ausgewählt werden aus der Gruppe bestehend aus:
Alkalikationen, insbesondere Natrium-, Kaliumkationen; Erdalkalikationen, insbesondere Calcium- und Magnesiumkationen; Eisenkationen, Mangankationen und anderen Schwermetallkationen; sowie deren Mischungen.

7. Verfahren nach einem der Ansprüche 1 bis 6, dadurch gekennzeichnet, daß Abwässer verwendet werden, welche zusätzlich Chelatbildner und/oder Chelatkomplexe enthalten, insbesondere Chelatbildner für zweiwertige Kationen, insbesondere Calcium und/oder magnesium, vorzugsweise EDTA und/oder EGTA, bzw. deren Metallkomplexe.

8. Verfahren nach einem der Ansprüche 1 bis 7, dadurch gekennzeichnet, daß Abwässer verwendet werden, welche einen alkalischen pH, insbesondere einen pH von ca. 8 bis 11, aufweisen.

9. Verfahren nach einem der Ansprüche 1 bis 8, da-durch gekennzeichnet, daß vorzugsweise solche Abwässer verwendet werden, welche einen Mangan- und/oder Eisen-Gehalt < 1% aufweisen.

10. Verfahren nach einem der Ansprüche 1 bis 9, dadurch gekennzeichnet, daß Abwässer verwendet werden, welche einen chemischen Sauerstoffbedarf (CSB) von ca. 150 bis 2000 mg/l O₂, vorzugsweise ca. 500 bis 800 mg/l O₂, aufweisen.

11. Verfahren nach einem der Ansprüche 1 bis 10, dadurch gekennzeichnet, daß als Bioreaktor ein Loch- bzw. Siebbodenkaskadenreaktor verwendet wird.

12. Verfahren nach einem der Ansprüche 1 bis 10, dadurch gekennzeichnet, daß als Bioreaktor ein Säulenreaktor mit im Inneren unbeweglichen Oberflächen verwendet wird.

13. Verfahren nach einem der Ansprüche 1 bis 10, dadurch gekennzeichnet, daß man Bioreaktoren aus inerten Kunststoffen und/oder Metallen verwendet.

14. Verfahren nach einem der Ansprüche 1 bis 13, dadurch gekennzeichnet, daß bei Bedarf eine tensidabwasserspezifische, insbesondere wäschereiabwasserspezifische Mischbiozönose vorkultiviert wird und auf den inneren Oberflächen des Bioreaktors angesiedelt wird.

15. Verfahren nach einem der Ansprüche 1 bis 14, dadurch gekennzeichnet, daß Aktivkohle als Adsorber verwendet wird, wobei der Adsorber vorzugsweise als Säule ausgebildet wird.

16. Verfahren nach einem der Ansprüche 1 bis 15, dadurch gekennzeichnet, daß das gereinigte Wasser einen pH von ca. 6 bis 10, insbesondere ca. 8 bis 9, aufweist.

17. Verfahren nach einem der Ansprüche 1 bis 16, dadurch gekennzeichnet, daß ca. 80 bis 95% der eingesetzten Abwässer für eine erneute Einspeisung in einen Waschprozeß als gereinigtes Wasser wiedergewonnen werden.

18. Verfahren nach einem der Ansprüche 1 bis 17, dadurch gekennzeichnet, daß prozeßbedingte Wasserverluste durch Frischwasserzugabe ersetzt werden.

19. Verfahren nach einem der Ansprüche 1 bis 18, dadurch gekennzeichnet, daß die zu reinigenden Abwässer zwischen 1. und 10 Stunden, insbesondere zwischen 2 und 6 Stunden, vorzugsweise ca. 4 Stunden im Bioreaktor aufbereitet werden, wobei gegebenenfalls der Bioreaktor im Kreislaufbetrieb gefahren wird.

20. Verfahren nach einem der Ansprüche 1 bis 19, dadurch gekennzeichnet, daß das den Bioreaktor verlassende Wasser lediglich noch ca. 5 bis 20% der organischen Inhaltsstoffe der eingespeisten Abwässer enthält.

21. Verfahren nach einem der Ansprüche 1 bis 20, dadurch gekennzeichnet, daß den zu reinigenden Abwässern bei Bedarf zusätzliche Nährstoffe für die mischbiozönotischen Mikroorganismen zugesetzt werden.

22. Verfahren nach einem der Ansprüche 1 bis 21, dadurch gekennzeichnet, daß die Abwässer Waschhilfsstoffe enthalten, welche ausgewählt werden aus der Gruppe bestehend aus:
Buildern, insbesondere Ortho- und kondensierte Phosphate, Borate, Silicate, Alkalien, Zeolithe, Komplexbilder;
Co-Buildern, insbesondere Polycarboxylat;
Bleichmitteln, insbesondere Perborate; sowie Bleichaktivatoren;
Vergrauungsinhibitoren, insbesondere Carboxymethylcellulose, Celluloseether;
Stabilisatoren; Schauminhibitoren;
Enzymen, insbesondere Lipasen, Proteasen und Amylasen;
optischen Aufhellern, insbesondere Stilben- und Biphenyldistyrylderivate; und
Füllstoffen, insbesondere Natriumsulfat; Farbstoffe; Duftstoffe;
sowie deren Mischungen.

23. Verfahren nach einem der Ansprüche 1 bis 22, dadurch gekennzeichnet, daß die Abwässer Stoffe enthalten, welche ausgewählt werden aus der Gruppe bestehend aus: Pflegesubstanzen für Kraftfahrzeuge, insbesondere Wachse auf Naturwachs- oder Polyethylenbasis; Poliersubstanzen; Fettstoffe; Schmierstoffe, insbesondere Silikonfette, Silikonöle, Motoröle, Getriebeöle; Treibstoffe, z.B. Benzin- und Dieselkraftstoffe; Frostschutzmittel, insbesondere Glykole; Aminoxide; quaternäre Ammoniumverbindungen; Betaine; Dialkyldimethylammoniumsalze, insbesondere Chloride; Streusalze; sowie deren Mischungen.

## Claims

1. Method of cleaning and reusing surfactant-containing waste waters from wash processes, the water leaving the wash process, after separation of settling and suspended materials, being passed to a collector; and this physically pre-cleaned water being passed to a bioreactor operating under aerobic conditions,
characterised in that
the bioreactor is columnar and has a compartmented mixed biozonosis containing multi-celled animal organisms, and being specific to surfactant waste water, for biological processing of the waste water, and in that the bioreactor is supplied with air and/or oxygen in the same current as the waste water to be cleaned;
in that the water leaving the bioreactor is passed to an adsorber; and
in that the biologically and physically cleaned water leaving the adsorber is again passed to the wash process as drinking water.

2. Method according to claim 1, characterised in that waste waters are used which originate from laundries; vehicle washing plants; washing installations for containers, particularly foodstuffs containers such for example as bottles, glasses or the like; medical washing installations, e.g. for surgical instruments and/or containers; or private households.

3. Method according to claim 1 or 2, characterised in that surfactant-containing waste water from private households, preferably exclusively human waste, is used; and the purified waste water is disinfected before re-use.

4. Method according to one of claims 1 to 3, characterised in that waste water is used which contains surfactants which are selected from the group comprising:
anionic surfactants, particularly carboxylates, soaps fatty alkylethercarboxylates, alkylsulphates, particularly sodium dodecylsulphate (SDS) alkylphosphates, alkyletherphosphates, alklybenzylsulphonates, olefinesulphonates, alkanesulphonates, and sulfosuccinic acid esters;
non-ionic surfactants, particularly oxethylates, fatty acid alkanolamides, polyhydroxy compounds, alkyloligoglycosides and alkylpolyglycosides; and
cationic surfactants, particularly tetraalkylammonium salts, imidazolinium salts, and their mixtures.

5. Method according to one of claims 1 to 4, characterised in that waste water is used which additionally contains anions which are selected from the group comprising:
inorganic anions, particularly nitrates, nitrites, sulphates, sulphites, sulphides, hydrogen sulphites, phosphonates, phosphates, oligo- and polyphosphates, hydrogen phosphates, hydroxides, halogenides, particularly chlorides, silicates; and
organic anions, particularly carboxylic acid anions, preferably acetates; substituted carboxylic acid anions, particularly hydroxycarboxylic acids such as citrates and tartrates;
and their mixtures.

6. Method according to one of claims 1 to 5, characterised in that waste water is used which additionally contains cations selected from the group comprising:
alkali cations, particularly sodium, potassium cations; earth alkali cations, particularly calcium and magnesium cations; iron cations, manganese cations and other heavy metal cations; and their mixtures.

7. Method according to one of claims 1 to 6, characterised in that waste water is used which additionally contains chelate formers and/or chelate complexes, particularly chelate formers for bivalent cations, particularly calcium and/or magnesium, preferably EDTA and/or EGTA or their metal complexes.

8. Method according to one of claims 1 to 7, characterised in that waste water is used which has an alkaline pH, particularly a pH of about 8 to 11.

9. Method according to one of claims 1 to 8, characterised in that waste water is preferably used which has a manganese and/or iron content of < 1%.

10. Method according to one of claims 1 to 9, characterised in that waste water is used which has a chemical oxygen requirement (COR) of about 150 to 2000 mg/l O₂, preferably about 500 to 800 mg/l O₂.

11. Method according to one of claims 1 to 10, characterised in that a perforated or screen base cascade reactor is used as a bioreactor.

12. Method according to one of claims 1 to 10, characterised in that a column reactor with surfaces immovable in the interior is used as a bioreactor.

13. Method according to one of claims 1 to 10, characterised in that bioreactors made of inert plastics and/or metals are used.

14. Method according to one of claims 1 to 13, characterised in that if required a mixed bionozosis, which is specific to surfactant waste water, particularly specific to waste water from washing plant, is previously cultivated and colonised on the inner surfaces of the bioreactor.

15. Method according to one of claims to 14, characterised in that activated carbon is used as an absorber, the absorber preferably being in the form of a column.

16. Method according to one of claims 1 to 15, characterised in that the cleaned water has a pH of about 6 to 10, particularly about 8 to 9.

17. Method according to one of claims 1 to 16, characterised in that about 80 to 95% of the waste water used is recovered for renewed return into a washing process as purified water.

18. Method according to one of claims 1 to 17, characterised in that water losses caused by the process are replaced by an addition of fresh water.

19. Method according to one of claims 1 to 18, characterised in that waste water to be cleaned is processed for between 1 and 10 hours, particularly between 2 and 6 hours, preferably about 4 hours in the bioreactor, the bioreactor being if necessary operated in circulatory operation.

20. Method according to one of claims 1 to 19, characterised in that water leaving the bioreactor still contains only about 5 to 20% of the organic contents of the waste water fed in.

21. Method according to one of claims 1 to 20, characterised in that if necessary additional nutrients for the mixed biozonotic micro-organisms are added to the waste water to be cleaned.

22. Method according to one of claims 1 to 21, characterised in that waste water contains washing aids, selected from the group comprising:
builders, particularly ortho- and condensed phosphates, borates, silicates, alkalis, zeolites, complex formers;
co-builders, particularly polycarboxylate;
bleaching agents, particularly perborates; and bleach activators;
greying inhibitors, particularly carboxymethylcellulose, cellulose ether;
stabilisers; foam inhibitors;
enzymes, particularly lipases, proteases and amylases;
optical brighteners, particularly stilbene- and biphenyldistyryl derivatives, and
fillers, particularly sodium sulphate, pigments; perfumes;
and their mixtures.

23. Method according to one of claims 1 to 22, characterised in that the waste water contains materials selected from the group comprising: servicing substances for motor vehicles, particularly waxes on a basis of natural wax or polyethylene; polishing substances; grease materials, lubricants, particularly silicon greases, silicon oil, engine oils, gear oils; fuels, e.g. petrol and diesel fuels; anti-frost agents, particularly glycol; amine oxides; quaternary ammonia compounds; betains; dialkyldimethyl ammonium salts, particularly chlorides; scattering salts; and their mixtures.

## Revendications

1. Procédé pour l'épuration et la réutilisation d'eaux usées contenant des agents tensioactifs provenant d'opérations de lavage, auquel cas l'eau issue de l'opération de lavage est envoyée, après séparation des matières denses et des matières en suspension, dans un réservoir collecteur et cette eau préalablement épurée physiquement est acheminée vers un bioréacteur opérant dans des conditions aérobies, caractérisé en ce que le bioréacteur se présente sous forme de colonne et comprend une microbiocénose mixte compartimentée, spécifique d'eaux usées chargées d'agents tensioactifs contenant des espèces pluricellulaires animales pour le traitement biologique des eaux usées, que le bioréacteur est alimenté par de l'air et/ou de l'oxygène à co-courant des eaux usées à épurer ; que l'eau quittant le bioréacteur est dirigée vers un adsorbeur et que l'eau épurée biologiquement et physiquement qui quitte l'adsorbeur est renvoyée dans le processus de lavage en tant qu'eau d'alimentation.

2. Procédé selon la revendication 1, caractérisé en ce qu'on utilise des eaux usées provenant de blanchisseries ; de stations de lavage de voitures ; d'installations de lavage pour récipients, notamment de récipients pour produits alimentaires, tels que par ex. bouteilles, verres ou analogues ; d'installations de lavage médicales, par ex. pour des instruments et/ou des récipients chirurgicaux ou provenant d'eaux ménagères .

3. Procédé selon la revendication 1 ou 2, caractérisé en ce qu'on utilise des eaux usées ménagères contenant des agents tensioactifs, à l'exclusion d'eaux usées fécales et que les eaux usées épurées sont désinfectées avant réemploi.

4. Procédé selon l'une des revendications 1 à 3, caractérisé en ce qu'on utilise des eaux résiduaires contenant des agents tensioactifs qui sont choisis dans le groupe constitué par :
des agents tensioactifs anioniques, en particulier des carboxylates, des savons, des alkyl d'acides gras éther carboxylates, des alkylsufates, en particulier le dodécylsulfate de sodium (SDS), des alkylphosphates, des alkylétherphosphates, des alkylbenzènesulfonates, des oléfine-sulfonates, des alcanesulfonates et des esters sulfosucciniques ;
des agents tensioactifs non ioniques, en particulier des produits d'éthoxylation, des alcanolamides gras, des composés polyhydroxylés, des alkyloligoglucosides et des alkylpolyglucosides ; et
des agents tensioactifs cationiques, en particulier des sels de tétraalkylammonium, des sels d'imidazolinium ;
ainsi que par leurs mélanges.

5. Procédé selon l'une des revendications 1 à 4, caractérisé en ce qu'on utilise des eaux usées qui contiennent en outre des anions qui sont choisis dans le groupe constitué par :
des anions inorganiques, en particulier des nitrates, nitrites, sulfates, sulfites, sulfures, hydrogénosulfites, hydroxydes, halogénures, notamment des chlorures et silicates; et
des anions organiques, en particulier des anions carboxyliques, de préférence des acétates ; des anions carboxyliques substitués, en particulier des acides hydroxycarboxyliques tels que citrates, tartrates ; ainsi que par leurs mélanges.

6. Procédé'selon l'une des revendications 1 à 5, caractérisé en ce qu'on utilise des eaux usées qui contiennent en outre des cations qui sont choisis dans le groupe constitué par :
des cations alcalins, en particulier des cations sodium, potassium ; des cations alcalino-terreux, en particulier des cations calcium et magnésium ; des cations fer, des cations manganèse et autres cations de métaux lourds ;
ainsi que par leurs mélanges.

7. Procédé selon l'une des revendications 1 à 6, caractérisé en ce qu'on utilise des eaux usées qui contiennent en outre des agents chélatants et/ou des complexes chélates, notamment des agents chélatants pour cations divalents, notamment pour le calcium et/ou le magnésium, de préférence EDTA et/ou EGTA, respectivt. leurs complexes métalliques.

8. Procédé selon l'une des revendications 1 à 7, caractérisé en ce qu'on utilise des eaux usées qui présentent un pH alcalin, en particulier un pH d'env. 8 à 11.

9. Procédé selon l'une des revendications 1 à 8, caractérisé en ce qu'on utilise de préférence des eaux usées qui présentent une teneur en manganèse et/ou en fer < 1%.

10. Procédé selon l'une des revendications 1 à 9, caractérisé en ce qu'on utilise des eaux usées qui présentent une demande chimique en oxygène (DCO) d'env. 150 à 2000 mg/l d'O₂, de préférence d'env. 500 à 800 mg/l d'O₂.

11. Procédé selon l'une des revendications 1 à 10, caractérisé en ce qu'un réacteur en cascade à plateaux perforés est utilisé comme bioréacteur.

12. Procédé selon l'une des revendications 1 à 10, caractérisé en ce qu'un réacteur à colonne avec des surfaces fixes à l'intérieur est utilisé comme bioréacteur.

13. Procédé selon l'une des revendications 1 à 10, caractérisé en ce qu'on utilise des bioréacteurs en matières synthétiques inertes et/ou en métaux.

14. Procédé selon l'une des revendications 1 à 13, caractérisé en ce que, suivant les besoins, une biocénose mixte spécifique d'eaux usées chargées d'agents tensioactifs, en particulier spécifique d'eaux usées de blanchisserie, est préalablement cultivée et fixée sur les surfaces intérieures du bioréacteur.

15. Procédé selon l'une des revendications 1 à 14, caractérisé en ce que du charbon actif est utilisé comme adsorbant, l'adsorbeur étant de préférence conçu sous forme de colonne.

16. Procédé selon l'une des revendications 1 à 15, caractérisé en ce que l'eau épurée présente un pH d'env. 6 à 10, en particulier d'env. 8 à 9.

17. Procédé selon l'une des revendications 1 à 16, caractérisé en ce qu'env. 80 à 95% des eaux usées mises en oeuvre sont récupérées sous forme d'eau épurée pour une alimentation renouvelée dans un processus de lavage.

18. Procédé selon l'une des revendications 1 à 17, caractérisé en ce que les pertes d'eau dues au procédé sont compensées par une addition d'eau fraîche.

19. Procédé selon l'une des revendications 1 à 18, caractérisé en ce que les eaux usées à épurer sont traitées entre 2 et 10 heures, en particulier entre 2 et 6 heures, de préférence pendant env. 4 heures dans le bioréacteur, le bioréacteur travaillant éventuellement en cycle fermé.

20. Procédé selon'l'une des revendications 1 à 19, caractérisé en ce que l'eau quittant le bioréacteur ne contient encore qu'env. 5 à 20% des constituants organiques des eaux usées d'alimentation.

21. Procédé selon l'une des revendications 1 à 20, caractérisé en ce que, suivant les besoins, des éléments nutritifs additionnels pour les micro-organismes de la biocénose mixte sont ajoutés aux eaux usées à épurer.

22. Procédé selon l'une des revendications 1 à 21, caractérisé en ce que les eaux usées contiennent des produits lessiviels qui sont choisis dans le groupe constitué par :
des adjuvants de détergence, en particulier des orthophosphates et des phosphates condensés, des borates, des silicates, des alcalis, des zéolithes, des complexants; des co-adjuvants, en particulier des polycarboxylates ; des agents de blanchiment, notamment des perborates, ainsi que par des activateurs de blanchiment ;
des inhibiteurs de ternissure, en particulier de la carboxyméthylcellulose, des éthers cellulosiques ;
des stabilisants ; des antimousses ; des enzymes, en particulier des lipases, des protéases et des amylases ;
des azurants optiques, en particulier des dérivés stilbéniques et biphényldistyryliques et des matières de charge, en particulier du sulfate de sodium ; des colorants ; des parfums ; ainsi que par leurs mélanges.

23. Procédé selon l'une des revendications 1 à 22, caractérisé en ce que les eaux usées contiennent des substances qui sont choisies dans le groupe constitué par des produits d'entretien pour véhicules automobiles, notamment des cires à base de cire naturelle ou de polyéthylène ; des produits à polir ; des graisses ; des lubrifiants, en particulier des graisses de silicone, des huiles de silicone, des huiles moteurs, des huiles à engrenages ; des carburants, par ex. de l'essence et du carburant diesel ; des antigels, en particulier des glycols ; des oxydes d'amines ; des composés d'ammonium quaternaire ; des bétaïnes ; des sels de dialkyldiméthylammonium, en particulier des chlorures ; des sels à répandre ; ainsi que par leurs mélanges.
